# EUROPEAN PATENT SPECIFICATION

(11) **EP 3 934 906 B1**
(45) Date of publication and mention of the grant of the patent: **07.05.2025**
(21) Application number: 19713249.1
(22) Date of filing: 05.03.2019
(51) Int. Cl.: B32B 1/08, B32B 5/18, B32B 15/04, B32B 27/08, B32B 27/28, F16L 59/02, F16L 59/14

(54) **TUBULAR ASSEMBLY COMPRISING LOW DENSITY, LOW THERMAL CONDUCTIVITY LOW THERMAL EFFUSIVITY POLYPHENYLENE SULFIDE FOAM**
ROHRFÖRMIGE ANORDNUNG MIT POLYPHENYLENSULFIDSCHAUMSTOFF MIT NIEDRIGER DICHTE, NIEDRIGER THERMISCHER LEITFÄHIGKEIT UND NIEDRIGEM WÄRMEEINDRINGKOEFFIZIENTEN
ENSEMBLE TUBULAIRE COMPRENANT UNE MOUSSE DE SULFURE DE POLYPHENYLÈNE À FAIBLE DENSITÉ, À FAIBLE CONDUCTIVITÉ THERMIQUE ET À FAIBLE EFFUSIVITÉ THERMIQUE

(43) Date of publication of application: 12.01.2022
(73) Proprietor: Parker-Hannifin Corporation, Cleveland, Ohio 44124 (US)
(72) Inventor: GUPTA, Sahil, Aurora, Ohio 44202 (US); EDWARDS, Gerald, Atwater, Ohio 44201 (US); JANSEN, John, Ravenna, Ohio 44266 (US); BEITZEL, Lee, Ravenna, Ohio 44266 (US)
(74) Representative: Murgitroyd & Company
(86) International application number: PCT/US2019/020727
(87) International publication number: WO 2020/180301

(56) References cited:
- CN-A- 108 548 039
- CN-A- 109 404 625
- JP-A- 2012 251 022
- US-A- 3 526 086
- US-A- 3 747 632
- US-A- 5 126 380

## Description

### Field of Invention

The present invention relates generally to fluid-carrying tubular assemblies, and more particularly to steam-carrying tubular assemblies.

### Background

Multi-layer tube assemblies are commonly utilized to convey steam - and other fluids, such as oil and gas. Steam-carrying tubes and hoses are used in several industries such as chemical plants, petroleum refineries, steel mills, foundries, power plants, and shipyards. For example, PARKER TEMPTUBES^{®} are pre-insulated tubing bundles installed at steam manifolds to carry steam for applications such as process-pipe heat tracing.

Standard construction of a steam hose in the heat-insulation industry involves a core metal tube, one or more layers of fiberglass or woven insulation, a polyimide tape to hold insulation in position, and an outer polymeric jacket. Wrapping fiberglass or forming the woven insulation and polyimide tape on a metal tube can take a significant amount of time. Additionally, glass fibers from the fiberglass can create a safety risk to operators, thereby requiring special protective equipment to work with steam hoses that include fiberglass. The operators must also pay special attention while working with fiberglass to prevent exposure (e.g., by covering the entire taping line with glass covers and using breathing masks and special personal protective equipment).

Additionally, manufacturing of such steam hoses with fiberglass requires a discontinuous two-step batch process - including tape wrapping followed by extrusion of a polymer jacket - due to the need to change fiberglass or polyimide tape reels or tearing of the tapes. For example, an entire tape line must be stopped during troubleshooting, which can have an adverse effect on the extrusion process or increase process control complexity.

Accordingly, the two steps are not performed concurrently on the same continuous steam hose. This batchwise process requires at least two operators, one for wrapping the fiberglass and another for extruding the polymer jacket.

Additionally, fiberglass tape is unable to retain its thermal properties in the presence of moisture, can release chlorine when exposed to moisture (e.g., causing corrosion to adjacent metal tubing), can harm field operators or make handling and installation unpleasant. Also, the fiberglass tape is often coated with a polymeric jacket to protect the fiberglass tape, such polymeric jackets can make the tubing heavy and difficult to handle.

Outside of steam hoses, some polymer foam materials are known. For example, polymer foam sheets - such as compression-molded sheets of openpored polyphenylene sulfide (PPS) foam with a closed surface - have been disclosed in U.S. Patent Application No. 5,716,999 ('999 Patent) issued on February 10, 1998.

JP2012-251022 seeks to provide a polyphenylene sulfide resin foam, low in yellowness index, high in whiteness index, and having superior surface appearance, heat insulation, heat resistance, lightweight properties and good moldability. The polyphenylene sulfide resin foam comprises 30 to 2,000 ppm of calcium component based on 100 mass% of the foam, wherein an L-value is ≥30, an a-value is ≤0, a b-value is ≤20, and a YI-value is ≤35.

### Summary of Invention

The present application provides a polyarylene sulfide (PAS) foam layer that circumscribes a hollow inner tube and may have a 50% or greater density reduction relative to the density of an un-foamed PAS polymer material and/or a 50% or greater thermal conductivity reduction relative to the thermal conductivity of an un-foamed PAS polymer material and/or 50% or greater thermal effusivity reduction relative to the thermal effusivity of an un-foamed PAS polymer material. As an example, the PAS foam layer may have a low density (e.g., less than 0.67 g/cc) and/or a low thermal conductivity (e.g., anywhere from 0.017 W/(m-K) to 0.145 W/(m-K)) and/or a low thermal effusivity (e.g., less than 316 Ws^{1/2}/m²/K, optionally anywhere from 38 Ws^{1/2}/m²/K to 316 Ws^{1/2}/m²/K) even at high temperatures (e.g., above 400 degrees Fahrenheit (°F) (about 204 degrees Celsius (°C)). Such a PAS foam layer may have characteristics appropriate for use as part of a steam hose.

Referring again to the PAS foam layer disclosed in the present application, such a PAS foam layer may perform the function of 3 or more layers of previously known tube assemblies that utilize a fiberglass/woven insulation, polyimide tape, and an outer polymeric sheath. For example, the thermal conductivity of a PAS foam layer may be about ~0.020 W/(m-K) - about 50% of the thermal conductivity of fiberglass tape - and the PAS foam layer may be relatively unaffected by the increase in temperature. Accordingly, the PAS foam layer enables more effective and reliable thermal performance at high temperatures compared to fiberglass tape, and thus fiberglass is not required for tube assemblies that include the PAS foam layer. Given that fiberglass tape is not required, the PAS foam layer enables enhancing worker safety by eliminating or reducing the presence of glass fibers.

Compared to fiberglass tape, the PAS foam layer has a much lower density and thermal conductivity. Lower density enables the tube assemblies made with the PAS foam layer to be light weight, more flexible, and easier to route and handle during installation. Also, the much lower thermal conductivity enables the PAS foam layer to have a thickness that fits into a smaller envelope without reduced performance compared to fiberglass tape.

The PAS foam layer has a much lower thermal effusivity or thermal inertia compared to the outer jacket of fiberglass wrapped tube. This promotes worker safety by increasing the threshold surface temperature for burns when human skin gets in contact with a hot surface unintentionally. Hence the risk of burning of human skin for a given contact time is severely reduced with a PAS foam tube compared to a fiberglass wrapped tube containing an outer unfoamed jacket.

The PAS foam layer enables quicker and less expensive installation and maintenance. For example, the tube assemblies with the PAS foam layer do not require expensive umbilical end termination boots, clamping, or moisture sealants.

The PAS foam layer can be formed on the hollow inner tube in a single continuous processing step. Continuously forming the PAS foam layer enables higher line speeds compared to previously known batch processes, thereby increasing productivity. For example, the PAS foam layer may be extruded over the hollow inner tube, as opposed to the two or more batch process steps required for producing fiberglass wrapped tubes that have a polymeric jacket.

The PAS foam layer enables reduction of manufacturing and supply chain costs. For example, continuously forming the PAS foam layer enables elimination of secondary processes such as coiling, uncoiling, and storage of materials (e.g., fiberglass tape) used for batch productions of fiberglass wrapped tubes. Producing the tube assembly with the PAS foam layer enables reduced labor costs since the tube assembly may be made by a single operator, as opposed to two operators required for producing fiberglass wrapped tubes (e.g., one for each batch step). Supply chain costs may be reduced, compared to previously known fiberglass wrapped tube assemblies, since tube assemblies including the PAS foam layer may have fewer components (e.g., the PAS foam layer in place of the fiberglass and polymeric jacket).

The PAS foam enables more robust thermal performance from a steam tube than fiberglass wrapped tubes. For example, in an embodiment, the cellular structure of the PAS foam layer has a thermal performance that is unaffected or minimally affected by twists, bends, or mechanical routing (e.g., imposed in the field during installation).

Also, in an embodiment, even though the foamed insulation is low-density, it is more crush-resistant and/or abrasion resistant than the polymeric jacket of fiberglass wrapped tubes. Accordingly, tie straps that are wrapped around the PAS foam tube assembly can be tightened more than tie straps for polymeric jacket of fiberglass wrapped tubes. For example, if due to installer error tie straps that are wrapped around the PPS foam tube assembly are overtightened, the PAS foam tube assembly may perform effectively, whereas the effectiveness of polymeric jacket of fiberglass wrapped tubes due to tightening may be significantly reduced if tightened the same amount.

In some applications multiple insulated bundles are installed closely and routed on flat cable trays. Several cable trays each containing several insulated bundles are sometimes laid out on top of each other. Generally, a minimum 0.5" gap is maintained between 2 bundles or between 2 cable trays to prevent damage to the outer jacket through temperature rise, thermal degradation and/or brittleness. In an embodiment, the PAS foam layer is more stable at high temperatures than the polymeric jacket of the fiberglass wrapped tube assemblies. Therefore a 0.5" gap between each PAS foam tube or cable trays containing PAS foam tube is not needed. Accordingly, the PAS foam layer enables space saving when installed and/or reduces the required amount of costly construction materials (e.g., cable trays, channel strut) and/or increases the number of PAS foamed tubes that can be installed within the same foot print.

According to one aspect, a tubular assembly includes a tubular first member having an outer surface and an inner surface, the inner surface defining an innermost surface of the assembly, and a tubular second member surrounding the outer surface of the first member, the second member comprising a foamed polyphenylene sulfide polymer material having a foamed density and a foamed thermal effusivity that is foamed from a mixture of an un-foamed polyphenylene sulfide polymer material having polymer chains that are branched or cross-linked and a foaming agent, the polyphenylene sulfide having an un-foamed density and an un-foamed thermal effusivity, wherein the foamed polyphenylene sulfide polymer material has an average cell diameter of at least 100 µm, the foamed density is less than about 50% of the un-foamed density, and the foamed thermal effusivity is less than about 50% of the un-foamed thermal effusivity.

According to another aspect, a tubular assembly including a tubular first member having an outer surface and an inner surface, the inner surface defining an innermost surface of the assembly, and a tubular second member surrounding the outer surface of the first member, the second member comprising a foamed polyphenylene sulfide polymer material having a foamed thermal conductivity that is foamed from a mixture of a foaming agent and an un-foamed polyphenylene sulfide polymer material having polymer chains that are branched or cross-linked, the polyphenylene sulfide having an un-foamed thermal conductivity, wherein the foamed polyphenylene sulfide polymer material has an average cell diameter of at least 100 µm, and the foamed thermal conductivity being at least about 50% less than the un-foamed thermal conductivity.

The foregoing and other features of the invention are hereinafter described in greater detail with reference to the accompanying drawings.

### Brief Description of the Drawings

Fig. 1 is an oblique view of an exemplary tube assembly with an inner layer and a foamed polyarylene sulfide (PAS) outer layer that has been separated into two parts.
Fig. 2 is an oblique view of the tube assembly of Fig. 1 where an end part of the foamed PAS outer layer has been removed from the inner layer.
Fig. 3 is an oblique view of the tube assembly of Fig. 2, which further includes an adapter attached to the inner layer.
Fig. 4 is a side view of the tube assembly of Fig. 3.
Fig. 5 is a top view of a partial cross-section of the tube assembly of Fig. 4 illustrating interior cells of the foamed PAS outer layer.
Fig. 6 is a schematic illustration of PPS polymer material being extruded onto the inner layer of Fig. 1.
Fig. 7 is an oblique view of another exemplary tube assembly that includes an intermediate layer between an inner layer and a foamed PAS outer layer.
Fig. 8 is an oblique view of another exemplary tube assembly that includes a foamed PAS layer as an intermediate layer along with other intermediate layers.
Fig. 9 is an oblique view of another exemplary tube assembly that includes multiple inner layers and an intermediate layer between the inner layers and a foamed PAS outer layer.
Fig. 10 is an oblique view of another exemplary tube assembly that includes multiple inner tubes circumscribing multiple inner layers and an intermediate layer between the inner layers and a foamed PAS outer layer.
Fig. 11 is an oblique view of another exemplary tube assembly that includes a heating element, an intermediate layer circumscribing the heating element and an inner layer, and a foamed PAS outer layer.

### Detailed Description

The principles of this present application have particular application to tubing assemblies configured to carry high-temperature fluids, such as steam, and thus will be described below chiefly in this context. It will be appreciated that principles of this invention may be applicable to other tubing assemblies where it is desirable to transport fluids, such as high temperature liquids.

Certain terminology may be employed in the following description for convenience rather than for any limiting purpose. For example, "thermal conductivity" may be understood to mean the effective thermal conductivity of a polymer foam that governs the overall heat transfer from one end of the foam to the other. The effective thermal conductivity is the combined result of heat conduction through the solid phases, heat conduction through the fluid phases, convective heat transfer between the fluid and solid phases caused by fluid movement, and radiative heat transfer.

Thermal effusivity may be understood to mean ability of a material to exchange thermal energy with its surroundings. It is a measure of thermal inertia of the body, and is given by the square root of the product of density, thermal conductivity and heat capacity of a material.

"Reduction in density" or "density reduction" may be understood to mean a percentage reduction in the density of a foamed material, based on the density of the non-foamed starting material measured under the same environmental conditions.

"Reduction in thermal conductivity" and "thermal conductivity reduction" may be understood to mean the percentage reduction in the thermal conductivity of a foamed material, based on the thermal conductivity of the non-foamed starting material measured under the same environmental conditions.

"Reduction in thermal effusivity" and "thermal effusivity reduction" may be understood to mean the percentage reduction in the thermal effusivity of a foamed material, based on the thermal effusivity of the non-foamed starting material measured under the same environmental conditions.

"Fiberglass tape" can include but not limited to insulating tapes made of fibrous glass or woven fiberglass.

"Fiberglass wrapped tube" may be understood to mean any tube or tubular assembly that contains a wrapped fiberglass tape as one of the layers of construction.

"Moisture sealant" may include single/multiple part sealants, epoxies and resins typically used to hermetically seal an umbilical end to prevent moisture ingression.

"Umbilical" may refer to the final composite product supplied for steam and or heat traced/tracing applications. Such a final composite product can contain single or multiple process tubes/hoses which may or may not be individually insulated or heat traced.

"Termination boots" can include thermoplastic and/or thermoset methods of bundle end terminations to provide hermetically sealing of an umbilical end.

"Cable trays" may refer to installing/routing umbilicals in an application. Cable trays provide a way of supporting and securing umbilicals at a facility.

"Enclosure" can include but not limited to thermoplastic/metallic junction boxes where two or more umbilical's can be joined or split into additional legs of a process flow.

"Resin" can include but not limited to a polymer material (e.g., a PAS or PPS polymer material) and an additive (e.g., a plasticizer, a compatibilizer, and/or an anti-oxidant).

Terminology of similar import other than the words specifically mentioned above likewise is to be considered as being used for purposes of convenience rather than in any limiting sense.

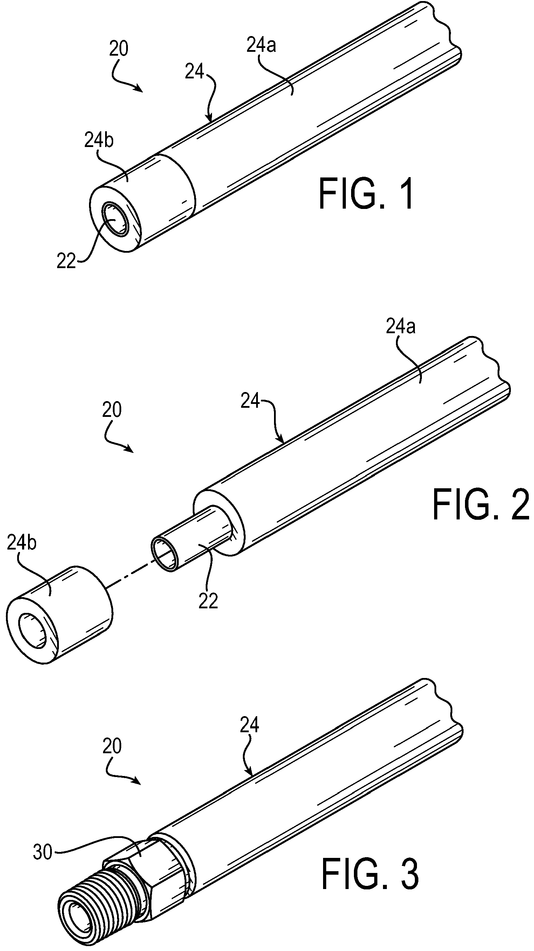

Referring now to the drawings and initially to Fig. 1, a steam tube assembly (an example of a tubular assembly) is designated generally by reference numeral 20. The steam tube assembly 20 includes an inner tube 22 (an example of a tubular first member) and an outer tube 24 (an example of a tubular second member). In an embodiment, the tubular assembly is part of a multi-tube, hose, fiber optic cable, or electrical wire bundle. In another embodiment, the tubular assembly is part of an umbilical connector or conduit.

The inner tube 22 and the outer tube 24 are not bonded. For example, in some embodiments, the outer tube 24 can be separated (e.g., by cutting through the outer tube 24 at an axial location of the outer tube 24) into a main part 24a and an end part 24b. As exemplified in Fig. 2, the end part 24b is not bonded to the radially outward facing surface of the inner tube 22 and can be removed from the inner tube 22 by sliding off of the inner tube 22.

The opposite axial end of the steam tube assembly 20 may be identical. For example, each end of the inner tube 22 is uncovered. In another embodiment, only one end of the radially outward facing surface of the inner tube is not covered by the outer tube. In yet another embodiment, both ends of the radially outward facing surface of the inner tube are covered by the outer tube.

In an embodiment, the radially outward facing surface of the inner tube and the outer tube are continuously bonded together. A bonding agent may or may not be incorporated as an additional layer. For example, in an embodiment, the bonding agent is an adhesive, surface modifier, resin, tackifier, solvent, thermoplastic (e.g., a thermoplastic elastomer or a thermoplastic vulcanizate), thermoset, a rubber material, and/or a mechanical encapsulation structure. In yet another embodiment, the inner tube and the outer tube are randomly or sequentially bonded to each other.

After cutting the outer tube 24 and removing the end part 24b, the exposed end of the main part 24a does not need to be sealed during storage or installation without risk of exposing the installer to glass fibers or without risking moisture damaging the main part 24a. For example, fiberglass does not form any part of the steam tube assembly 20.

In another embodiment, fiberglass is incorporated into the steam tube assembly. For example, as an intermediate layer between the inner tube and the outer tube. In another example, the fiberglass is a layer that circumscribes the outer tube.

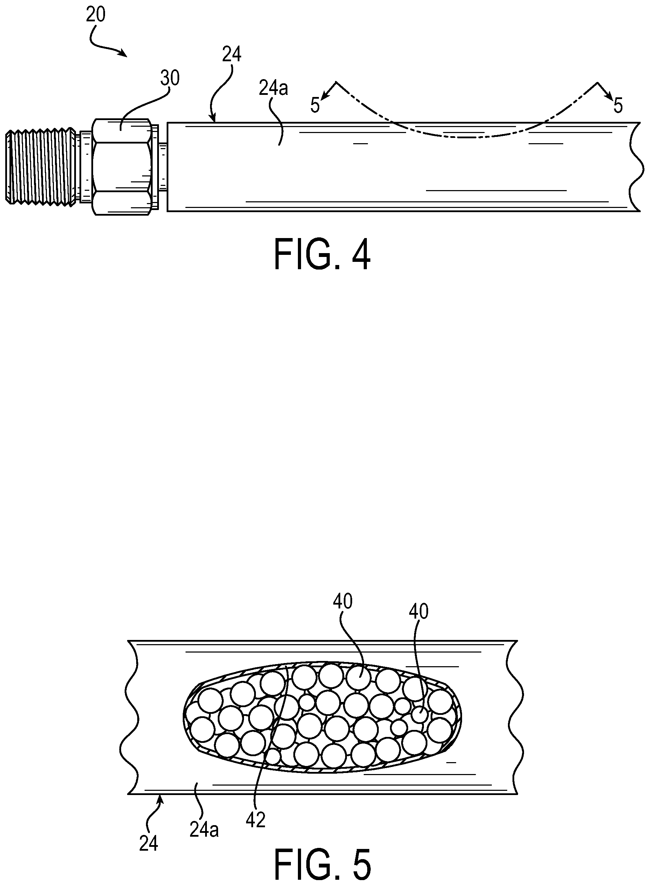

Turning briefly to Figs. 3 and 4 and then again to Fig. 2, the steam tube assembly 20 may include an adapter 30. For example, after the end part 24b (shown in Figs. 1 and 2) of the outer tube 24 is removed from the inner tube 22, the adapter 30 is attached to the inner tube 22.

The opposite axial end of the steam tube assembly 20 may be identical. For example, each end includes an adapter 30 attached to a respective end of the inner tube 22.

In the example shown, the adapter 30 includes a threaded end and a wrench receiving portion. In an embodiment, the adapter is another adapter suitable for connecting ends of steam tube assemblies together, such as a quickcoupling adapter. In another embodiment, only one end of the steam tube assembly includes the adapter. In yet another embodiment, the steam tube assembly does not include an adapter.

Referring again to Fig. 2, the inner tube 22 has an outer surface and an inner surface that defines a fluid pathway. For example, the inner tube 22 is entirely made of a homogenous metal, such as stainless steel or copper, and configured to carry steam. In an embodiment, the inner tube is configured to carry high temperature liquids. In another embodiment, the inner tube includes a metal alloy, a metal blend, a metal composite, a polymer, a polymer composite, a polymer alloy, a polymer blend, and/or a polymer-metal composite. In another embodiment, the inner surface of the inner tube is solid, foamed, porous, corrugated, convoluted, and/or patterned.

In yet another embodiment, the inner tube is a coiled metal wire, an electric cable, and/or a fiber optic cable. For example, in some of such embodiments, a non-hollow component, such as copper wire or fiber optic fibers, takes the place of the inner tube. In some other embodiments, the inner tube is not present and only the outer tube is present.

The outer tube 24 circumscribes the outer surface of the inner tube 22 and is formed of a foamed polyarylene sulfide (PAS) polymer material. Fig. 1 illustrates the outer tube 24 in a cut state where the end part 24b can be removed. When in an uncut state, the main part 24a and the end part 24b form one continuous piece that forms a single continuous radially outwardly facing surface. In an embodiment, the single continuous radially outwardly facing surface axially extends the entire length of the steam tube assembly.

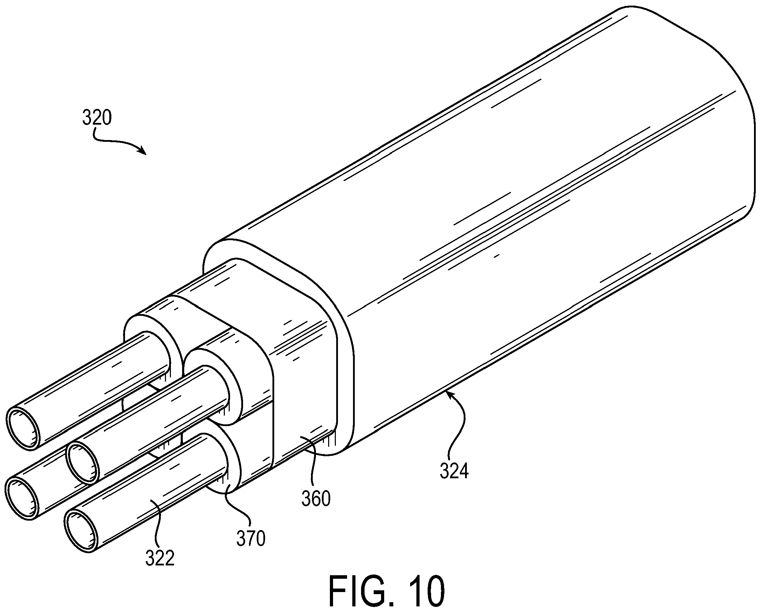

The outer tube 24 may define an outermost surface of the steam tube assembly 20. In another embodiment, the outer tube is circumscribed by one or more outer layers. For example, an outer cover layer may wrap around multiple tube assemblies that each include a respective inner tube and outer tube, as exemplified in Fig. 10 and discussed further below. The outer cover layer may be made of foamed polyarylene sulfide polymer material.

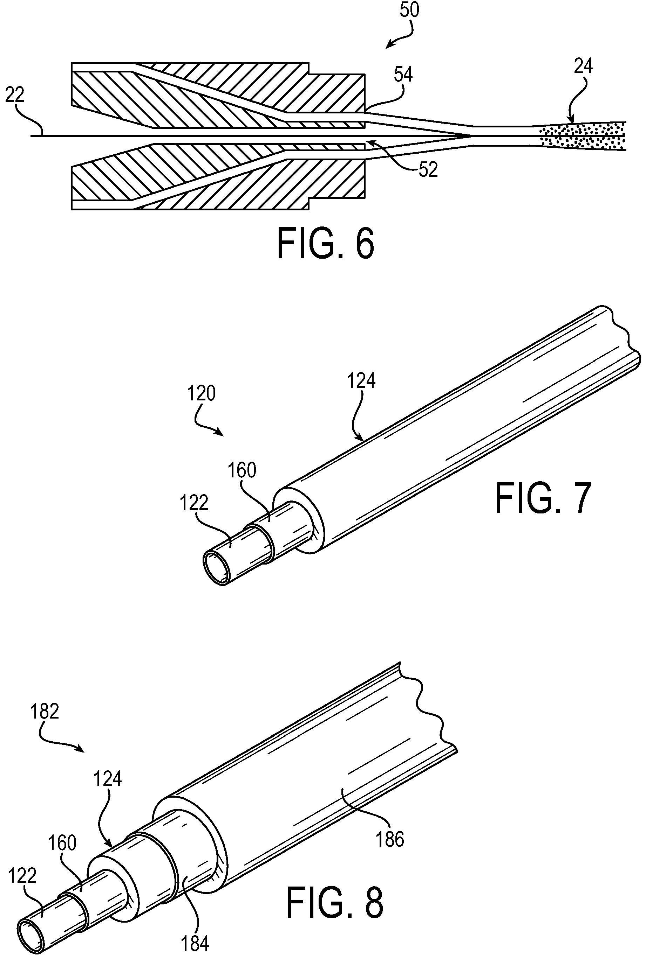

The outer tube 24 is formed by a single layer of the foamed polyarylene sulfide polymer material. As discussed above, the outer tube 24 contacts and is not chemically bonded to at least a portion of the radially outward facing surface of the inner tube 22, thereby allowing the end part 24b to slide relative to the inner tube 22 after the end part 24b is cut from the main part 24a. In another embodiment, the steam tube assembly includes an intermediate layer, as exemplified in Fig. 7 and discussed further below, that the outer tube contacts and is not chemically bonded to.

In an embodiment, the outer tube comprises two or more layers of the foamed polyarylene sulfide polymer material. Each layer of the outer tube may have a similar or different density reduction, a similar or different thermal conductivity reduction, a similar or different thermal effusivity reduction, and/or a similar or different cellular morphology.

In some embodiments, the outer tube and the inner tube are not present and instead the PAS polymer material is formed into a different shape. For example, in some such embodiments, the PAS polymer material is formed into a sheet.

In other embodiments, the PAS polymer material is formed into a tube that is not in combination with another component. In further embodiments, the PAS polymer material is formed into a tube that is not in combination with an inner tube (e.g., the PAS material may form the innermost radial surface to carry steam without a separate metal tube radially inward of the PAS material).

The foamed PAS polymer material forming the outer tube 24 has anywhere from 86% to 90% density reduction and anywhere from a 90% to a 94% thermal conductivity reduction and anywhere from 88% to 94% thermal effusivity reduction relative to the corresponding values of an un-foamed PAS polymer material. For example, the foamed PAS polymer material is classified as a low-density, low-thermal conductivity, low-thermal effusivity foam with a density of less than 0.188 grams per cubic centimeter (g/cc) and a thermal conductivity of less than 0.029 watts per meter-kelvin W/(m-K) and a thermal effusivity of less than 76 Ws^{1/2}/m²/K, whereas the PAS polymer material prior to foaming has a density of 1.340 g/cc and a thermal conductivity of 0.290 W/(m-K) and a thermal effusivity of 632 Ws^{1/2}/m²/K. As discussed further below, the density reduction and/or the thermal conductivity reduction and/or the thermal effusivity reduction can be controlled and tuned by varying the (1) nature, type, and/or formulation of a foaming agent used to foam the un-foamed PAS polymer material; (2) nature, type, and/or formulation of the PAS polymer material - with or without additives; and/or (3) processing equipment, processing conditions, and/or related tooling.

In another embodiment, the foamed PAS polymer material forming the outer tube has anywhere from 68% to 86% density reduction and anywhere from 71% to 94% thermal conductivity reduction and anywhere from 68% to 94% thermal effusivity reduction relative to the corresponding values of an un-foamed PAS polymer material. For example, the foamed PAS polymer material has a density anywhere from 0.429 g/cc to 0.188 g/cc and a thermal conductivity of anywhere from 0.084 W/(m-K) to 0.017 W/(m-K) and a thermal effusivity of anywhere from 202 Ws^{1/2}/m²/K to 38 Ws^{1/2}/m²/K, whereas the PAS polymer material prior to foaming has a density of 1.340 g/cc and a thermal conductivity of 0.290 W/(m-K) and a thermal effusivity of 632 Ws^{1/2}/m²/K.

In another embodiment, the foamed PAS polymer material forming the outer tube has anywhere from 63% to 68% density reduction and anywhere from 63% to 90% thermal conductivity reduction and anywhere from 63% to 88% thermal effusivity reduction relative to the corresponding values of an un-foamed PAS polymer material. For example, the foamed PAS polymer material has a density anywhere from 0.496 g/cc to 0.429 g/cc and a thermal conductivity of anywhere from 0.107 W/(m-K) to 0.029 W/(m-K) and a thermal effusivity of anywhere from 234 Ws^{1/2}/m²/K to 76 Ws^{1/2}/m²/K, whereas the PAS polymer material prior to foaming has a density of 1.340 g/cc and a thermal conductivity of 0.290 W/(m-K) and a thermal effusivity of 632 Ws^{1/2}/m²/K.

In another embodiment, the foamed PAS polymer material forming the outer tube has anywhere from a 50% to a 63% density reduction and anywhere from a 50% to a 90% thermal conductivity reduction relative to the un-foamed density of the PAS polymer material and anywhere from 50% to 88% thermal effusivity reduction relative to the corresponding values of an un-foamed PAS polymer material. For example, the foamed PPS polymer material has a density anywhere from 0.670 g/cc to 0.496 g/cc and a thermal conductivity of anywhere from 0.145 W/(m-K) to 0.029 W/(m-K), whereas the PPS polymer material prior to foaming has a density of 1.340 g/cc and a thermal conductivity of 0.290 W/(m-K) and a thermal effusivity of 632 Ws^{1/2}/m²/K.

In an embodiment, the foamed PAS polymer material forming the outer tube has a 50% or greater density reduction relative to the density of an unfoamed PAS polymer material. In another embodiment, the foamed PAS polymer material forming the outer tube has a 63% or greater density reduction. In another embodiment, the foamed PAS polymer material forming the outer tube has 68% or greater density reduction. In another embodiment, the foamed PAS polymer material forming the outer tube has 86% or greater density reduction. In another embodiment, the foamed PAS polymer material has anywhere from 50% to 63% density reduction. In another embodiment, the foamed PAS polymer material has anywhere from 63% to 68% density reduction. In yet another embodiment, the foamed PAS polymer material has anywhere from 68% to 86% density reduction. In another embodiment, the foamed PAS polymer material has anywhere from 68% to 90% density reduction. In a further embodiment, the foamed PAS polymer material forming the outer tube has anywhere from 86% to 90% density reduction.

In an embodiment, the foamed outer layer has 50% or greater thermal conductivity reduction relative to thermal conductivity of an un-foamed PAS polymer material. In an embodiment, the foamed outer layer has 63% or greater thermal conductivity reduction relative to thermal conductivity of an un-foamed PAS polymer material. In an embodiment, the foamed outer layer has 71% or greater thermal conductivity reduction. In an embodiment, the foamed outer layer has 90% or greater thermal conductivity reduction. In another embodiment, the foamed outer layer has anywhere from 50% to 71% thermal conductivity reduction. In yet another embodiment, the foamed outer layer has anywhere from 63% to 94% thermal conductivity reduction. In yet another embodiment, the foamed outer layer has anywhere from 71% to 94% thermal conductivity reduction. In yet another embodiment, the foamed outer layer has anywhere from 90% to 94% thermal conductivity reduction.

In an embodiment, the foamed outer layer has 50% or greater thermal effusivity reduction relative to thermal effusivity of an un-foamed PAS polymer material. In an embodiment, the foamed outer layer has 63% or greater thermal effusivity reduction relative to thermal effusivity of an un-foamed PAS polymer material. In an embodiment, the foamed outer layer has 68% or greater thermal effusivity reduction. In an embodiment, the foamed outer layer has 88% or greater thermal effusivity reduction. In another embodiment, foamed outer layer has anywhere from 50% to 68% thermal effusivity reduction. In another embodiment, foamed outer layer has anywhere from 63% to 94% thermal effusivity reduction. In yet another embodiment, the foamed outer layer has anywhere from 68% to 94% thermal effusivity reduction. In yet another embodiment, the foamed outer layer has anywhere from 88% to 94% thermal effusivity reduction.

Turning now to Fig. 5, the foamed PAS polymer material forms the outer tube 24 a closed-cell foam with numerous closed cells 40 and a thin outer skin 42. The thin outer skin 42 defines a smooth and continuous outermost surface of the main part 24a of the outer tube 24. In an embodiment, the foamed PAS polymer material does not have a thin outer skin. In another embodiment, the cellular morphology of the foamed PAS polymer material is semi-closed along with a thin outer skin. For example, the percentage of the cells that are closed cells can be controlled by the type and concentration of foaming agent.

The closed-cell structure of the foamed PAS polymer material prevents water ingression, even if a shallow crack or fracture forms on the outer surface of the outer tube 24. Hundreds to thousands of closed cell walls are formed between the outermost surface of the outer tube 24 and the inner tube 22 (shown in Figs. 1 and 2), thereby preventing moisture from passing radially inward through foamed PAS polymer material to the inner tube 22. In another embodiment, fewer or more cell walls are formed based upon the desired size of the outer tube 24 and/or the current application.

Preventing moisture from passing through the outer tube 24 can enhance the life of the inner tube 22 compared to fiberglass wrapped tube assemblies where interior metal tubing may be exposed to additional moisture, especially in the case of damage or improper handling/installation.

In an embodiment, the cellular morphology of the foamed PAS polymer material is classified as macrocellular characterized by an average cell diameter 100 micrometers (µm) or greater. As discussed further below, the cellular morphology can be controlled and tuned by varying the (1) nature, type, and/or formulation of a foaming agent used to foam the un-foamed PAS polymer material; (2) nature, type, and/or formulation of the PAS polymer material - with or without additives; and/or (3) processing equipment, processing conditions, and/or related tooling. The cellular structure of the foamed insulation may create and maintain maximum thermal performance that is unaffected or minimally affected by twists, bends, and/or mechanical routing imposed during installation.

In another embodiment, outside the scope of the invention, the cellular morphology of the foamed PAS polymer material is classified as microcellular characterized by an average cell diameter between 1 µm and 100 µm. In yet another embodiment, outside the scope of the invention, the cellular morphology of the foamed PAS polymer material is classified as ultramicrocellular characterized by an average cell diameter anywhere from 0.1 µm to 1 µm.

Turning now to Fig. 6, which schematically illustrates an extruder 50 that is configured to extrusion mold the PAS polymer material to form the outer tube 24 on the inner tube 22. For example, the extruder 50 includes a central passage 52 and a radially outer passage 54. The central passage is configured to allow the inner tube 22 to move axially through. The radially outer passage 54 is configured to direct the PAS polymer material from a PAS polymer material reservoir (not shown) to the inner tube 22 to form the outer tube 24 on the inner tube 22.

The extruder 50 can be a standalone single-screw extruder (SSE). In another embodiment, at least two extruders are utilized. For example, the extruders may be in series - the first extruder being an SSE and second extruder being also an SSE. In another example, one extruder is a twin screw extruder (TSE) and second extruder is an SSE.

Other suitable methods of extruding and foaming polymer materials are described in Foam Extrusion: Principles and Practice, 2nd Edition. Ed. S. T. Lee, C.B. Park. CRC Press, 2014*.* Also, suitable extruder designs, extrusion setups, screw designs are described in Polymer Extrusion, 5th Edition. C. Rauwendaal. Hanser Publicatios, 2014*.*

In an embodiment, the PAS polymer material is foamed on the inner tube. In another embodiment, the PAS polymer material is foamed and then applied to the inner tube. In yet another embodiment, the outer tube is formed by coextrusion molding, tandem extrusion, injection molding, compression molding, calendaring, rotational molding and/or blow molding and/or a combination of any of the mentioned processes. For example, in a continuous process or a batch process.

A foaming agent is mixed with the un-foamed PAS polymer material to foam the PAS polymer material. For example, the un-foamed PAS polymer material is mixed with a chemical foaming agent that is present in an amount ranging from 1.0 percent by weight (wt%) to 3 wt% of the mixture. In another embodiment, the foaming agent is present in an amount ranging from 0.1 wt% to 5 wt% of the mixture. In another embodiment, the foaming agent is present in an amount ranging from 2 wt% to 4 wt% of the mixture. In yet another embodiment, the foaming agent is mixed with un-foamed PAS polymer material and other additives, and foaming agent is present in an amount ranging from 0.1 wt% to 5 wt% of the mixture.

Those well-versed in the art of polymer foaming would know and understand that adding more chemical foaming agent beyond a certain prescribed limit may not necessarily provide increased enhancements in density or thermal conductivity or thermal effusivity reductions, but could be detrimental with regards to the cellular structure and mechanical properties of the foam.

In another embodiment, the foamed PAS polymer material is formed by mixing the PAS polymer material with only a physical foaming agent. Mixing of the PAS polymer material and the physical foaming agent can happen inside the extruder barrel or outside the extruder barrel downstream such that the physical foaming agent is injected into the polymer melt at high pressures such as 500 psi. In an example, the un-foamed PAS polymer material is mixed with a physical foaming agent that is present in an amount ranging from 0.1 wt% to 0.5 wt% of the mixture. In another example, the physical foaming agent is present in an amount ranging from 0.01 wt% to 1.5 wt% of the mixture. In another example, the physical foaming agent is present in an amount ranging from 0.05 wt% to 1.1 wt% of the mixture. In yet another example, the physical foaming agent is mixed with unfoamed PAS polymer material and other additives, and physical foaming agent is present in an amount ranging from 0.01 wt% to 1.5 wt% of the mixture.

Those well-versed in the art of polymer foaming would understand that adding more physical foaming agent beyond a certain prescribed limit may not provide increased enhancement in density or thermal conductivity or thermal effusivity reductions, but could be detrimental with regards to the cellular structure and mechanical properties of the foam.

In yet another embodiment, the foamed PAS polymer material is formed by mixing the PAS polymer material with a chemical foaming agent and a physical foaming agent using the methods described above. In other examples, a combination of a chemical foaming agent and a physical foaming agent are present in any one of the amounts above.

Polyarylene sulfide (PAS) refers to a general class of high temperature resistant polymer materials. The polyarylene sulfide may include repeating units of the formula (I):

-[(Ar¹)*ₙ*-X]*ₘ*-[(Ar²)*ⱼ*-Y]*ᵢ*-[(Ar³)_{*k*-}Z]*ₗ*-[(Ar⁴)*ₒ*-W]*ₚ* (I)

where Ar¹, Ar², Ar³ and Ar⁴ are the same or different and are arylene units of 6 to 18 carbon atoms; W, X, Y, and Z are the same or different and are bivalent linking groups selected from -SO₂-, -S-, -SO-, -CO-, -O-, -COO-, or alkylene or alkylidene groups of 1 to 6 carbon atoms and wherein at least one of the linking groups is -S-, such that the concentration of -[Ar-S]- linkage in structure (I) is equal to 50 mol% or greater. The arylene units Ar¹, Ar², Ar³ and Ar⁴ may be selectively and independently substituted or unsubstituted. Advantageous arylene systems are phenylene, biphenylene, naphthylene, anthracene and phenanthrene to name a few.

Within the PAS polymer material family, poly(phenylene sulfide) (PPS) polymer is the most preferable. The PAS polymer material of any of the above embodiments may include or may be any of the PPS polymer materials discussed below.

The PPS polymer material may have the following general structure (II), 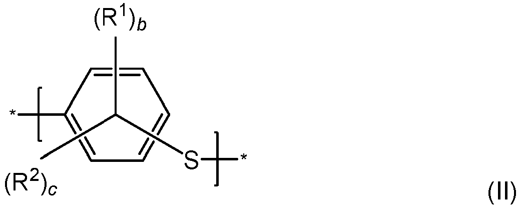 where R¹ and R² are substituents on the phenyl group, such that R¹ and R² can be independently hydrogen, halogen, alkyl group, alkoxy group, haloalkyl group, cycloalkyl group, heterocycloalkyl group, cycloalkyloxy group, aryl group, aralkyl group, aryloxy group, aralkyloxy group, heteroaryl group, heteroaralkyl group, alkenyl group, alkynyl group, amine group, amide group, alkyleneamine group, aryleneamine group, or alkenyleneamine group, nitro, cyano, carboxylic acid or a salt thereof, phosphonic acid or a salt thereof, or sulfonic acid or a salt thereof. Values of b and c can be 0 (meaning no substitution) or greater.

Furthermore, each repeating unit in formula (II) can have a different or same attachment position of the sulfur atom to the phenyl ring. In addition, each unit can have a different pattern of substitution on the phenyl groups, for example a combination of units that are unsubstituted (b = 0) and units that are substituted (b > 0).

In a further preferable embodiment, the PPS polymer material has the constitutional repeating unit (III) show below, 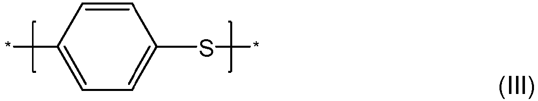 such that R¹ and R² are both hydrogen according to general structure (II).

The un-foamed PPS polymer material according to structure (II) or (III) is included as part of a PPS resin and 90 molar percent (mol%) or more of the PPS resin is the above constitutional repeating unit. For example, about 10 mol% or less of the above constitutional repeating unit in the PPS resin is replaced by an additional constitutional repeating unit having any one of the following structures (IV) or a combination thereof.

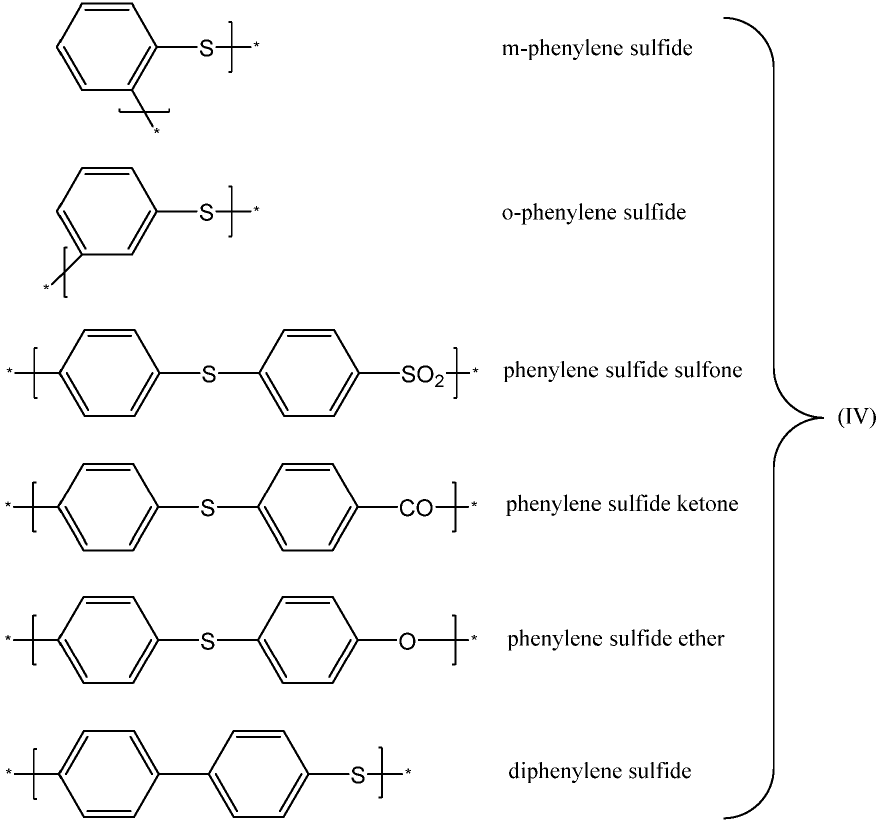

Even though it is not indicated in the above chemical structures, each phenyl group in the above units can have R¹ and R² substitutions according to structure (II). R¹ and R² substituents of phenyl groups in the above structures are hydrogen.

In an embodiment, 70 mol% or more of the PPS resin comprises repeating units with structure (II) or (III). For example, about 30 mol% or less of the constitutional repeating unit in the PPS resin is replaced by an additional constitutional repeating unit having any one of the structures represented by (IV) or a combination thereof.

In another embodiment, 50 mol% or more of the PPS resin comprises of repeating units with structure (II) or (III). For example, about 50 mol% or less of the constitutional repeating unit in the PPS resin is replaced by an additional constitutional repeating unit having any one of the structures represented by (IV) or a combination thereof.

In another embodiment, 30 mol% or more of the PPS resin comprises of repeating units with structure (II) or (III). For example, about 70 mol% or less of the constitutional repeating unit in the PPS resin is replaced by an additional constitutional repeating unit having any one of the structures represented by (IV) or a combination thereof.

The PPS polymer material can be synthesized using different methods such that the polymer chains are linear or semi-linear or branched or cross-linked or a combination thereof. In an embodiment of the foamed PPS tubular assembly, the PPS polymer material chains are linear. In another embodiment, the polymer chains are semi-linear. In another embodiment, the polymer chains are branched. In yet another embodiment, the polymer chains are cross-linked. In yet another embodiment, the PPS resin comprises a combination of linear, and/or semi-linear, and/or branched, and/or cross-linked polymer chains. For example, the combination may be produced during monomer synthesis reactions, polymerization reactions, or post-polymerization operations including, but not limited to, melt compounding and solution blending.

The PPS polymer material may exhibit certain general physical and chemical characteristics that are described below. Some examples of commercially available PPS resins that may be used in an embodiment include: RYTON^{®} PPS from SOLVAY^{®}, FORTRON^{®} PPS from CELANESE^{®}, TORELINA^{®} from TORAY^{®}, and DIC.PPS^{®} from DIC^{®}.

The PPS polymer material is high performance semi-crystalline polymer that offers an excellent combination of thermal, mechanical, and chemical resistance properties. Accordingly, applications requiring high temperature stability, toughness, and chemical resistance at elevated temperatures, are good candidates for the PPS polymer material.

The PPS polymer material performs well in challenging environments. It provides high hardness, rigidity and dimensional stability, excellent thermal resistance, inherent flame-retardance, and low creep and moisture absorption, among many other benefits.

In an embodiment, the PPS polymer material has an excellent media resistance.

The PPS polymer material is usable in high-temperature environments because of its exceptional thermal properties. For example, as shown in table 1 below, PPS has a maximum continuous service temperature of about 220 degrees Celsius (°C) to 230°C, which is higher than commonly foamed polymer materials that are also listed in the table. In an embodiment, the service temperature of PPS polymer material is up to 240°C.

**Table 1. Polymer materials with their maximum continuous service temperatures.**

| **Polymer Materials with their Maximum Continuous Service Temperatures** | |
|---|---|
| **Polymer** | **T (°C)** |
| | |
| PPS | 220-230 |
| Poly(phenylene sulfide) | |
| | |

| **Commonly foamed polymer materials** | |
|---|---|
| Silicone | 200 - 210 |
| PPSU | 190 |
| Poly(phenylene sulfone) | |
| PESU/PSU | 150 - 180 |
| Poly(sulfone)/poly(ether sulfone) | |
| PEI | 170 |
| Poly(ether imide) | |
| Nylon 4,6 | 150 - 160 |
| Nylon 6,6 / 6,10 | 140 - 150 |
| PET | 130 - 140 |
| Polyethylene terephthalate | |
| PVDF | 140 |
| Poly(vinylidene fluoride) | |
| PC | 125 - 135 |
| Polycarbonate | |
| PP | 110 - 120 |
| Polypropylene | |
| PLA | 110 |
| Polylactic acid | |
| PPO/PPE | 100 - 110 |
| Polyphenylene oxide/ether | |

| **Polymer Materials with their Maximum Continuous Service Temperatures** | |
|---|---|
| **Polymer** | **T (°C)** |
| HDPE | 90 - 100 |
| High density polyethylene | |
| ABS | 90 |
| Acrylonitrile Butadiene Styrene | |
| PS | 80 - 90 |
| Polystyrene | |
| TPU | 70 - 90 |
| Thermoplastic Polyurethane | |
| LDPE | 75 - 85 |
| Low density polyethylene | |
| EVA | 70 |
| Poly(ethyl vinyl acetate) | |
| PVC | 60 - 70 |
| Polyvinyl chloride | |

The PPS polymer material has excellent dimensional stability and a very low and predictable shrinkage at high soldering temperatures. Bowing or warping is minimized in an optimally molded part. Withstanding these higher temperatures can make lead-free soldering possible.

The PPS polymer material has a high-purity with very low levels of ionic impurities. In an embodiment, the PPS polymer material has good electrical insulating properties and a low dissipation factor.

The PPS polymer material is an excellent dielectric material with a low dielectric constant value. In an embodiment, the PPS polymer material has a high breakdown voltage strength and also possesses superior capacitance stability with temperature.

The PPS polymer material has great resistance to thermal oxidation, so parts made from it withstand high thermal stress. In an embodiment, the PPS polymer material is able to withstand service temperatures as high as 240°C for multiple years.

The PPS polymer material is not hygroscopic. In an embodiment, the PPS polymer material absorbs just 0.02% water after immersion in water at 23°C for 24 hours (ASTM Method D-570). Such is far less than what occurs in many other polymer materials. Also, in contrast to other polymer materials, (e.g., polyamides), the PPS polymer material does not expand when exposed to water, and it releases the absorbed moisture when stored in dry air. Additionally, absorbed atmospheric moisture causes no molecular degradation.

The PPS polymer material has excellent resistance to hydrolysis. In an embodiment, the PPS polymer material undergoes little or no change in tensile strength and elongation when exposed to 95°C water for over 1,000 hours at 15 psi.

The PPS polymer material has superb chemical resistance. In an embodiment, the PPS polymer material does not dissolve in any known organic solvent below 200°C and is virtually unaffected by acids, bases, alcohols, oxidizing bleaches and many other chemicals at elevated temperatures for extended times.

The PPS polymer material has excellent resistance to all liquid and gaseous fuels, including methanol and ethanol, and withstands hot engine oils, greases, antifreeze and other automotive fluids. In an embodiment, the PPS polymer material is useful in fuel applications because of its stability during prolonged contact with gasoline formulations having various octane, sulfur, oxygenate, and contaminant levels.

The PPS polymer material has good resistance to ultraviolet radiation. In an embodiment, the PPS polymer shows little change in tensile strength, notched impact strength, and other mechanical properties after 2,000 hours of exposure to ultraviolet radiation.

The PPS polymer material is relatively impermeable to gases and to fuels and other liquids compared to other materials. Permeation is lowest with unfilled PPS grades. The combination of low permeability and high chemical resistance makes the PPS polymer material excellent for automotive, industrial, chemical, petroleum and aircraft applications, along with medical and packaging uses where a high gas barrier is needed for medical and packaging uses.

The PPS polymer material forming the outer tube 24 is flame-resistant. In an embodiment, the PPS resin has a flammability rating of V0, V1, or V2 according to Underwriters Laboratories' UL94 and UL94HB standards. Accordingly, additional flame retardants are not required to pass UL type additional flame retardants to pass UL type flammability tests.

In another embodiment, the PPS resin is not flame retardant. PPS resin foamed with chemical or physical foaming agents may or may not retain flame retardancy, or its flame retardancy potential may increase or decrease. In an embodiment, the foamed PPS resin has a flammability rating of V0, V1, or V2. In another embodiment, the foamed PPS resin is not flame retardant.

In an embodiment, the PAS resin of formula (I) is comprised of a homopolymer. In another embodiment, the PAS resin is comprised of a copolymer such that the arylene sulfide constitutional units of formula (II) in the PAS resin of formula (I) are equal to or greater than 90 mol%. In yet another embodiment, the PAS resin is comprised of a copolymer such that the arylene sulfide constitutional units of formula (II) in the PAS resin of formula (I) are equal to or greater than 70 mol%. In yet another embodiment, the PAS resin is comprised of a copolymer such that the arylene sulfide constitutional units of formula (II) in the PAS resin of formula (I) are equal to or greater than 50 mol%. In yet another embodiment, the PAS resin is comprised of a copolymer such that the arylene sulfide constitutional units of formula (II) in the PAS resin of formula (I) are equal to or greater than 30 mol%.

In an embodiment, the PAS resin is comprised of a blend, an alloy, a composite or a combination thereof. For example, an embodiment of the PAS resin comprises an additive including, but not limited to, plasticizers, compatibilizers, anti-oxidants, UV stabilizers, radiopaque compounds, colorants (pigments or dyes), flow modifiers, impact modifiers, elastomers (such as in thermoplastic elastomers), cross-linked rubber (such as in thermoplastic vulcanizates), lubricants, releasing agents, coupling agents, cross-linking agents, dispersing agents, foaming agents, foam nucleating agents, flame retardants, reinforcing metals, minerals, nucleating agents, and/or fillers (such as talc, clay, mica, graphite, carbon black, carbon nanotubes, graphene, silica, POSS, powdered metals, powdered ceramics, metal or ceramic based nanowires, glass fibers etc.). Another embodiment of the PAS resin includes a combination of any of the above additives.

In another embodiment a polyarylene sulfide (PAS) composition and/or formulation forms the inner tube. For example, any of the PAS polymer materials discussed above may form the inner tube.

In an embodiment, the foaming agent used to foam the PAS polymer material is a chemical foaming agent. Examples of chemical foaming agents include, but are not limited to, Citric acid/Sodium bicarbonate, ADCA (Azodicarbonate), OBSH (p,p'-Oxybis (benzene) sulfonyl), TSH (p-Toluene sulfonyl hydrazide), TSS (p-Toluene sulfonyl semicarbazide), DNPT (Dinitrosopentamethylenetetramine), 5PT (5-Phenyltetrazole), SBH (Sodium borohydride), Magnesium carbonate (MgCO₃), Calcium carbonate (CaCO₃), Zinc carbonate (ZnCO₃), a combination of MgCO₃, CaCO₃, and ZnCO₃, tartaric acid, azodicarbonamide, a hydrazine derivative, a semi-carbazide derivative, a tetrazole derivative, a benzoxazine derivative, a metal oxide derivative or a metal carbonate derivative. In another embodiment, the foaming agent includes a combination of any of the above chemical foaming agents.

In an embodiment, the foaming agent used to foam the PPS polymer material is a physical foaming agent. Examples of physical foaming agents include, but are not limited to, Propane (C₃H₈), n-Butane (C₄H₁₀), i-Butane (CH₃(CH₃)CHCH₃), n-pentane (C₅H₁₂), i-Pentane (CH₃(CH₃)CHCH₂CH₃), HCFC-22 (CHF₂Cl), HCFC-142b (CHF₂ClCH₃), HFC-152a (CHF₂CH₃), HCFC-123 (CHCl₂CF₃), HCFC-123a (CHFClCF₂Cl), HCFC-124 (CHFClCF₃), HFC-134a (CH₂FCF₃), HFC-143a (CH₃CF₃), CFC-11 (CFCl₃), CFC-12 (CF₂Cl₂), CFC-113 (CFCl₂CF₂Cl), CFC-114 (CF₂CLCF₂Cl), MeCl (CH₃Cl), MeCl₂ (CH₂Cl₂), Carbon dioxide (CO₂), Nitrogen (N₂), Oxygen (O₂), supercritical CO₂, air, helium, argon, aliphatic hydrocarbons (e.g., butanes, pentanes, hexanes, and heptanes), chlorinated hydrocarbons (e.g., dichloromethane and trichloroethylene), and hydrochlorofluorocarbons (e.g., dichlorotrifluoroethane). In another embodiment, the foaming agent includes a combination of any of the above physical foaming agents. In yet another embodiment, the foaming agent includes a combination of any of the above chemical foaming agents and any of the above physical foaming agents.

Table 2 below provides examples of different polymer materials and processing conditions that can be used to make PAS foams (e.g., to result in PPS foamed polymer material) as well as a few final physical properties of those foams.

**Table 2. Examples showing polymer materials, processing conditions and physical properties of different PAS foams.**

| | ***Example 1*** | ***Example 2*** | ***Example 3*** | ***Example 4*** | ***Example 5*** | ***Example 6*** |
|---|---|---|---|---|---|---|
| | | | | | | |

| Polymer Type | PPS 1 | PPS 1 | PPS 1 | PPS 1 | PPS 2 | PPS 2 |
|---|---|---|---|---|---|---|
| Foaming Agent Type | CFA | CFA | PFA | CFA | CFA | PFA |
| Foaming Agent Class | Tetrazoles | Metal Oxides / Metal Carbonates | Nitrogen | Metal Oxides / Metal Carbonates | Tetrazoles | Tetrazoles |

| **Extrusion Conditions** | | | | | | |
|---|---|---|---|---|---|---|
| Zone 1 SP (°C) | 240 | 200 | 271 | 282 | 280 | 282 |
| Zone 2 SP (°C) | 300 | 250 | 293 | 304 | 300 | 293 |
| Zone 3 SP (°C) | 300 | 300 | 304 | 316 | 300 | 304 |
| Zone 4 SP (°C) | 280 | 280 | 316 | 327 | 280 | 327 |
| Zone 5 SP (°C) | - | - | 316 | 327 | - | 316 |
| Zone 6 SP (°C) | - | - | 316 | 327 | - | 316 |
| Zone 7 SP (°C) | - | - | 163 | 327 | - | 316 |
| Zone 8 SP (°C) | - | - | 281 | 327 | - | 316 |
| Zone 9 SP (°C) | - | - | 264 | 327 | - | 316 |

| **Properties** | | | | | | |
|---|---|---|---|---|---|---|
| Cellular Morphology | Closed | Closed | Closed | Closed | Closed | Closed |
| Average Cell size (mm) | 80 | 220 | 50 | 170 | 175 | 200 |
| Density (g/cc) | 0.35 | 0.18 | 0.37 | 0.25 | 0.43 | 0.48 |
| Density Reduction (%) | 74 | 87 | 72 | 81 | 68 | 64 |
| Thermal Conductivity (W/m/K) | 0.030 | 0.024 | 0.030 | 0.029 | 0.055 | 0.066 |
| Thermal Conductivity Reduction (%) | 90 | 92 | 90 | 90 | 81 | 77 |
| Effusivity (Ws^{1/2}/m²/K) | 103.8 | 66.6 | 106.8 | 86.3 | 155.8 | 180.4 |
| Effusivity Reduction (%) | 84 | 89 | 83 | 86 | 75 | 71 |
| Flame Retardancy (UL94 Vertical Rating) | V-0 | V-0 | V-0 | V-0 | V-0 | V-0 |

Turning now to Fig. 7, an exemplary embodiment of the steam tube assembly is shown at 120. The steam tube assembly 120 is substantially the same as the above-referenced steam tube assembly 20, and consequently the same reference numerals but indexed by 100 are used to denote structures corresponding to similar structures in the steam tube assemblies. In addition, the foregoing description of the steam tube assembly 20 is equally applicable to the steam tube assembly 120 except as noted below. Moreover, it will be appreciated that aspects of the steam tube assemblies may be substituted for one another or used in conjunction with one another where applicable.

The steam tube assembly 120 includes an inner tube 122, an outer tube 124, and an intermediate layer 160 separating the inner tube 122 from the outer tube 124. For example, the intermediate layer 160 circumscribes the inner tube 122.

In an embodiment, the intermediate layer is a braiding or spiral winding comprising metal wire and/or polymeric fiber. In another embodiment, the intermediate layer is a wrapped tape, film, filament or strip comprising fiberglass and/or woven glass. In another embodiment, the intermediate layer is a combination of some or all of the above. In yet another embodiment, the intermediate layer is multiple layers.

Turning now to Fig. 8, an exemplary embodiment of the steam tube assembly is shown at 182. The steam tube assembly 182 is substantially the same as the above-referenced steam tube assembly 120, and consequently the same reference numerals to denote structures corresponding to similar structures in the steam tube assemblies. In addition, the foregoing description of the steam tube assembly 120 is equally applicable to the steam tube assembly 182 except as noted below. Moreover, it will be appreciated that aspects of the steam tube assemblies may be substituted for one another or used in conjunction with one another where applicable.

The steam tube assembly 182 includes an inner tube 122, an outer tube 124, and an intermediate layer 160 separating the inner tube 122 from the outer tube 124. The steam tube assembly 182 also includes an outer intermediate layer 184 and an outer layer 186.

The outer intermediate layer 184 may circumscribe the outer tube 124 and separate the outer layer 186 from the outer tube 124. The outer intermediate layer 184 may comprise the same material as the inner tube 122, the intermediate layer 160, or the outer tube 124. In an embodiment, the outer intermediate layer comprises a different material from the inner tube, the intermediate layer, and/or the outer tube.

The outer layer 186 may circumscribe the outer intermediate layer 184. The outer layer 186 may comprise the same material as the inner tube 122, the intermediate layer 160, the outer tube 124, or the outer intermediate layer 184. In an embodiment, the outer layer comprises a different material from the inner tube, the intermediate layer, the outer tube, and/or the outer intermediate layer.

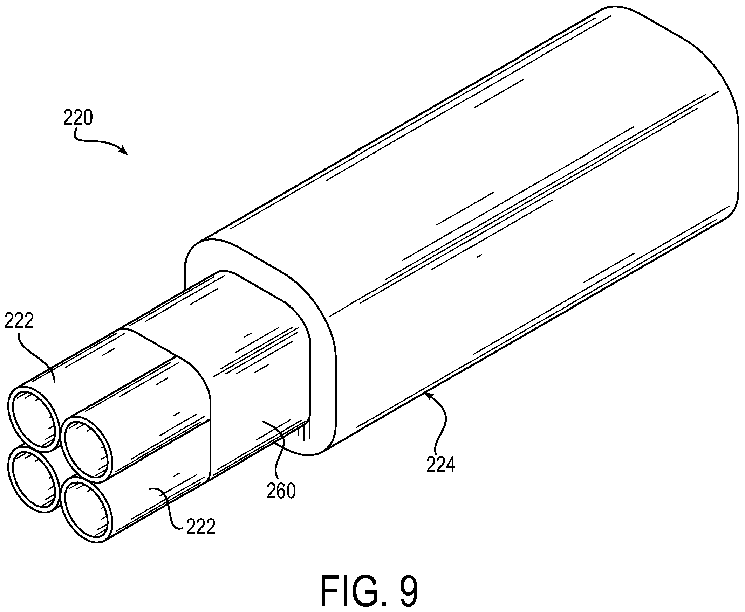

Turning now to Fig. 9, an exemplary embodiment of the steam tube assembly is shown at 220. The steam tube assembly 220 is substantially the same as the above-referenced steam tube assemblies 20 and 120, and consequently the same reference numerals but indexed by 200 are used to denote structures corresponding to similar structures in the steam tube assemblies. In addition, the foregoing description of the steam tube assemblies 20 and 120 is equally applicable to the steam tube assembly 220 except as noted below. Moreover, it will be appreciated that aspects of the steam tube assemblies may be substituted for one another or used in conjunction with one another where applicable.

The steam tube assembly 220 includes four inner tubes 222, an outer tube 224, and an intermediate layer 260 separating the inner tubes 222 from the outer tube 224. For example, the inner tubes 222 are bundled together and the intermediate layer 260 circumscribes all of the inner tubes 222, and the outer tube 224 circumscribes the intermediate layer 260 along with the inner tubes 222.

In an embodiment, the outer tube is a single continuous body of the PAS polymer material such that the PAS polymer material insulates the inner tubes. In another embodiment, steam tube assembly includes more than four inner tubes. In yet another embodiment, the steam tube assembly includes two or three inner tubes.

Turning now to Fig. 10, an exemplary embodiment of the steam tube assembly is shown at 320. The steam tube assembly 320 is substantially the same as the above-referenced steam tube assemblies 20, 120, and 220, and consequently the same reference numerals but indexed by 300 are used to denote structures corresponding to similar structures in the steam tube assemblies. In addition, the foregoing description of the steam tube assemblies 20, 120, and 220 is equally applicable to the steam tube assembly 320 except as noted below. Moreover, it will be appreciated that aspects of the steam tube assemblies may be substituted for one another or used in conjunction with one another where applicable.

The steam tube assembly 320 includes four inner tubes 322, an outer tube 324, an intermediate layer 360, and four intermediate outer tubes 370 circumscribing each corresponding inner tube 322. For example, the intermediate outer tubes 370 are bundled together and the intermediate layer 360 circumscribes all of the intermediate outer tubes 370, and the outer tube 324 circumscribes the intermediate layer 360 along with the intermediate outer tubes 370 and the inner tubes 322.

The first intermediate outer tubes 370 may each be made of the same PAS polymer material as the outer tube 324 and in the same manner. In an embodiment, the first intermediate outer tubes are made of any other PAS polymer material used to make any of the outer layers described above. In another embodiment, the intermediate outer tube is a single continuous body of the PAS polymer material such that the PAS polymer material insulates the inner tubes. In yet another embodiment, steam tube assembly includes more than four intermediate outer tubes and corresponding inner tubes. In another embodiment, the steam tube assembly includes two or three intermediate outer tubes and corresponding inner tubes.

In an embodiment, the intermediate outer tubes are not bonded to the inner tubes. In another embodiment, each intermediate outer tube is continuously bonded to the corresponding inner tube. In yet another embodiment, each intermediate outer tube is randomly or sequentially bonded to each the corresponding inner tube. In another embodiment, the steam tube assembly does not include the intermediate layer.

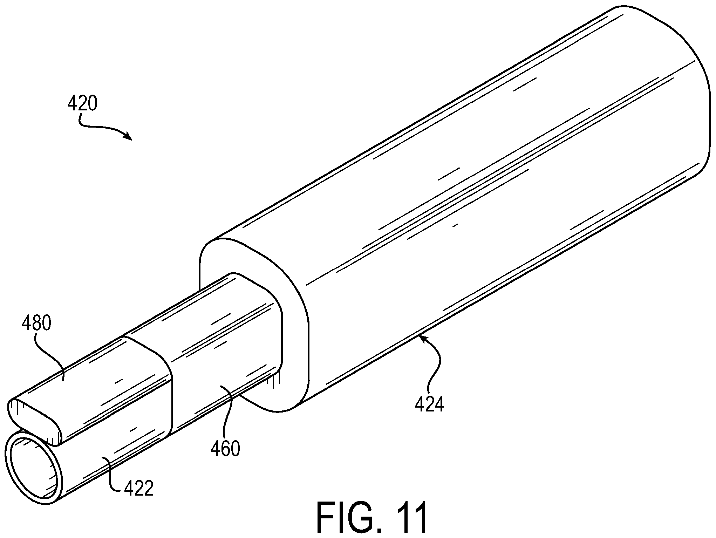

Turning now to Fig. 11, an exemplary embodiment of the steam tube assembly is shown at 420. The steam tube assembly 420 is substantially the same as the above-referenced steam tube assemblies 20, 120, 220, and 320, and consequently the same reference numerals but indexed by 400 are used to denote structures corresponding to similar structures in the steam tube assemblies. In addition, the foregoing description of the steam tube assemblies 20, 120, 220, and 320 is equally applicable to the steam tube assembly 420 except as noted below. Moreover, it will be appreciated that aspects of the steam tube assemblies may be substituted for one another or used in conjunction with one another where applicable.

The steam tube assembly 420 includes an inner tube 422, an outer tube 424, an intermediate layer 460, and a heating element 480. For example, the heating element extends along the inner tube 422 and is disposed between the inner tube 422 and the intermediate layer 460. In an embodiment, the heating element is formed by two metal wires that are covered in a polymer. In another embodiment, the heating element is multiple heating elements that cover the inner tube (e.g., cover the inner tube in a coiled or braided configuration, or extend parallel to the length of the inner tube).

Each tube discussed above with reference to Figs. 1-11 is illustrated with a circular cross section. In other embodiments, some of the tubes or each tube have a different cross-sectional shape. For example, in some embodiments the cross-sectional shape of the inner tube and outer tube - along with intermediate layers, if present - is rectangular (e.g., square). In other embodiments, the cross-sectional shape of the inner tube and outer tube - along with intermediate layers, if present - is another shape (e.g., a non-standard shape that may be dictated by the tooling used to make different layers of the tube assembly, the cross-section of the preceding layer, and/or the processing/manufacturing conditions.

Although the invention has been shown and described with respect to a certain embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. A tubular assembly comprising:
a tubular first member having an outer surface and an inner surface, the inner surface defining an innermost surface of the assembly; and
a tubular second member surrounding the outer surface of the first member, wherein the second member comprises a foamed polyphenylene sulfide polymer material having a foamed density and a foamed thermal effusivity that is foamed from a mixture of an un-foamed polyphenylene sulfide polymer material having polymer chains that are branched or cross-linked and a foaming agent, the polyphenylene sulfide having an un-foamed density and an un-foamed thermal effusivity,
wherein the foamed polyphenylene sulfide polymer material has an average cell diameter of at least 100 µm,
wherein the foamed density is less than about 50% of the un-foamed density; and
wherein the foamed thermal effusivity is less than about 50% of the unfoamed thermal effusivity.

2. The tubular assembly of claim 1, wherein the foaming agent comprises between about 0.1-5% by total weight of the foaming agent and the polyphenylene sulfide polymer material.

3. The tubular assembly of any one of the preceding claims, wherein the foaming agent is a chemical foaming agent comprising tetrazole, metal carbonate, or metal oxide.

4. The tubular assembly of any of the preceding claims, wherein the foamed polyphenylene sulfide polymer material has a foamed thermal conductivity and the un-foamed polyphenylene sulfide polymer material has an un-foamed thermal conductivity, the foamed thermal conductivity being at least about 50% less than the un-foamed thermal conductivity.

5. The tubular assembly of any of the preceding claims, wherein the foamed polyphenylene sulfide polymer material is a closed-cell foam.

6. The tubular assembly of preceding claims 1-4, wherein the foamed polyphenylene sulfide polymer material is a semi-closed-cell foam.

7. The tubular assembly of any of the preceding claims, wherein at least about 70 mol% of the polyphenylene sulfide polymer material has a repeating unit of the following structural formula:

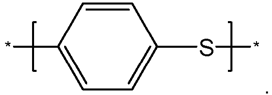

8. The tubular assembly of any of the preceding claims, wherein at least about 70 mol% of the polyphenylene sulfide polymer material has a repeating unit of one of the following structural formula: 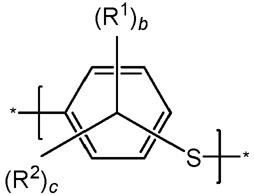 wherein R¹ and R² are independently hydrogen, halogen, alkyl group, alkoxy group, haloalkyl group, cycloalkyl group, heterocycloalkyl group, cycloalkyloxy group, aryl group, aralkyl group, aryloxy group, aralkyloxy group, heteroaryl group, heteroaralkyl group, alkenyl group, alkynyl group, amine group, amide group, alkyleneamine group, aryleneamine group, or alkenyleneamine group, nitro, cyano, carboxylic acid or a salt thereof, phosphonic acid or a salt thereof, or sulfonic acid or a salt thereof, and wherein values of b and c can be 0 (meaning no substitution) or greater.

9. The tubular assembly of any of the preceding claims, wherein 30 mol% or less of the polyphenylene sulfide polymer material has a repeating unit selected from the group consisting of one or more of the following:

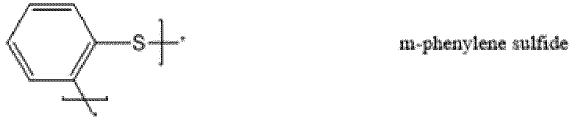

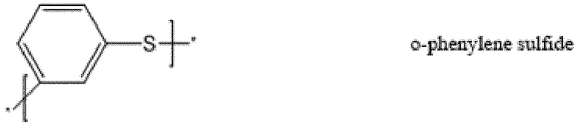

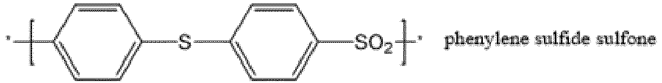

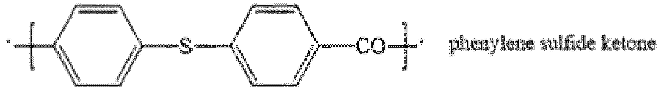

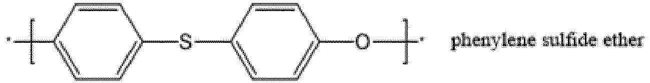

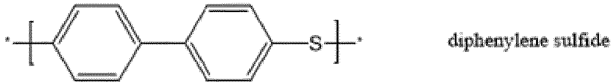

10. The tubular assembly of any of the preceding claims, wherein one or both of the first member or the second member is slidably movable relative to the other one of the first member or the second member.

11. The tubular assembly of any one of claims 1-9, further comprising one or more tubular third members, each of the third members being the same as or different from the first member and being the same as or different from each of the other third members,
wherein the second member surrounds the first member and each of the third tubular members,
the tubular assembly further comprising a first intermediate layer surrounding the first member and each of the one or more third members, and being disposed between the second member and the first member and each of the third members.

12. The tubular assembly of any of the preceding claims, further comprising one or more tubular third members, each of the third members being the same as or different from the first member and being the same as or different from each of the other third members,
wherein the second member surrounds the first member and each of the third tubular members,
the tubular assembly further comprising an individual fourth member surrounding a corresponding one of the first member and each of the third members, the fourth member comprising a foamed polyphenylene sulfide polymer material having a foamed density that is foamed from an un-foamed polyphenylene sulfide polymer material having an un-foamed density,
wherein the foamed density of the foamed polyphenylene sulfide polymer material of the fourth member is less than about 50% of the un-foamed density of the un-foamed polyphenylene sulfide polymer material of the fourth member, and
wherein the foamed polyphenylene polymer material of the fourth member is the same as or different from the foamed polyphenylene polymer material of the second member.

13. The tubular assembly of any of the preceding claims 1-11, further comprising:
one or more tubular third members, wherein each of the third members is the same as or different from the first member and the same as or different from each of the other third members; and
at least two tubular fourth members, wherein each fourth member surrounds a corresponding one of the first member and the third members, each fifth member comprising a foamed polyphenylene sulfide polymer material having a foamed density that is foamed from an un-foamed polyphenylene sulfide polymer material having an un-foamed density,
wherein the foamed density of the foamed polyphenylene sulfide polymer material of the fourth member is less than about 50% of the un-foamed density of the un-foamed polyphenylene sulfide polymer material of the fourth member;
wherein the foamed polyphenylene polymer material of the fourth member is the same as or different from the foamed polyphenylene polymer material of the second member.

14. The tubular assembly of any of the preceding claims, further comprising a heating element disposed between the first member and the second member and extending along a length of the first member.

15. A tubular assembly comprising:
a tubular first member having an outer surface and an inner surface, the inner surface defining an innermost surface of the assembly; and
a tubular second member surrounding the outer surface of the first member, wherein the second member comprises a foamed polyphenylene sulfide polymer material having a foamed thermal conductivity that is foamed from a mixture of a foaming agent and an un-foamed polyphenylene sulfide polymer material having polymer chains that are branched or cross-linked, the polyphenylene sulfide having an un-foamed thermal conductivity,
wherein the foamed polyphenylene sulfide polymer material has an average cell diameter of at least 100 µm, and
wherein the foamed thermal conductivity is at least about 50% less than the un-foamed thermal conductivity.

## Patentansprüche

1. Eine röhrenförmige Anordnung, die Folgendes beinhaltet:
ein röhrenförmiges erstes Element, das eine äußere Oberfläche und eine innere Oberfläche aufweist, wobei die innere Oberfläche eine innerste Oberfläche der Anordnung definiert; und
ein röhrenförmiges zweites Element, das die äußere Oberfläche des ersten Elements umgibt, wobei das zweite Element ein geschäumtes Polyphenylensulfidpolymermaterial mit einer geschäumten Dichte und einem geschäumten Wärmeeindringkoeffizienten,
das aus einer Mischung eines nichtgeschäumten Polyphenylensulfidpolymermaterials mit Polymerketten, die verzweigt oder vernetzt sind, und eines Schaumbildners geschäumt wird, beinhaltet, wobei das Polyphenylensulfid eine nichtgeschäumte Dichte und einen nichtgeschäumten Wärmeeindringkoeffizienten aufweist,
wobei das geschäumte Polyphenylensulfidpolymermaterial einen durchschnittlichen Zelldurchmesser von mindestens 100 µm aufweist,
wobei die geschäumte Dichte weniger als etwa 50 % der nichtgeschäumten Dichte beträgt; und
wobei der geschäumte Wärmeeindringkoeffizient weniger als etwa 50 % des nichtgeschäumten Wärmeeindringkoeffizienten beträgt.

2. Röhrenförmige Anordnung gemäß Anspruch 1, wobei der Schaumbildner etwa 0,1-5 % des Gesamtgewichts des Schaumbildners und des Polyphenylensulfidpolymermaterials ausmacht.

3. Röhrenförmige Anordnung gemäß einem der vorhergehenden Ansprüche, wobei der Schaumbildner ein chemischer Schaumbildner ist, der Tetrazol, Metallcarbonat oder Metalloxid beinhaltet.

4. Röhrenförmige Anordnung gemäß einem der vorhergehenden Ansprüche, wobei das geschäumte Polyphenylensulfidpolymermaterial eine geschäumte Wärmeleitfähigkeit aufweist und das nichtgeschäumte Polyphenylensulfidpolymermaterial eine nichtgeschäumte Wärmeleitfähigkeit aufweist, wobei die geschäumte Wärmeleitfähigkeit mindestens etwa 50 % weniger als die nichtgeschäumte Wärmeleitfähigkeit beträgt.

5. Röhrenförmige Anordnung gemäß einem der vorhergehenden Ansprüche, wobei das geschäumte Polyphenylensulfidpolymermaterial ein geschlossenzelliger Schaumstoff ist.

6. Röhrenförmige Anordung gemäß einem der vorhergehenden Ansprüche 1-4, wobei das geschäumte Polyphenylensulfidpolymermaterial ein halbgeschlossenzelliger Schaumstoff ist.

7. Röhrenförmige Anordung gemäß einem der vorhergehenden Ansprüche, wobei mindestens etwa 70 Mol-% des Polyphenylensulfidpolymermaterials eine Repetiereinheit der folgenden Strukturformel aufweisen:

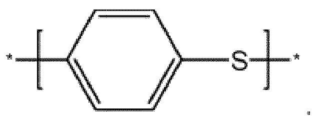

8. Röhrenförmige Anordnung gemäß einem der vorhergehenden Ansprüche, wobei mindestens etwa 70 Mol-% des Polyphenylensulfidpolymermaterials eine Repetiereinheit einer der folgenden Strukturformeln aufweisen: 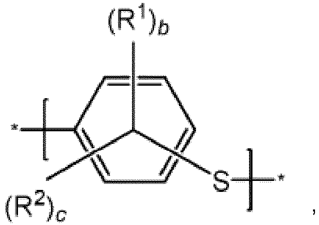 wobei R¹ und R² unabhängig Wasserstoff, Halogen, Alkylgruppe, Alkoxygruppe, Haloalkylgruppe, Cycloalkylgruppe, Heterocycloalkylgruppe, Cycloalkyloxygruppe, Arylgruppe, Aralkylgruppe, Aryloxygruppe, Aralkyloxygruppe, Heteroarylgruppe, Heteroaralkylgruppe, Alkenylgruppe, Alkinylgruppe, Amingruppe, Amidgruppe, Alkylenamingruppe, Arylenamingruppe oder Alkenylenamingruppe, Nitro, Cyan, Carbonsäure oder ein Salz davon, Phosphonsäure oder ein Salz davon oder Sulfonsäure oder ein Salz davon sind und wobei Werte von b und c 0 (was keine Substitution bedeutet) oder größer sein können.

9. Röhrenförmige Anordnung gemäß einem der vorhergehenden Ansprüche, wobei 30 Mol-% oder weniger des Polyphenylensulfidpolymermaterials eine Repetiereinheit aufweisen, die aus der Gruppe ausgewählt ist, die aus einem oder mehreren der Folgenden besteht:

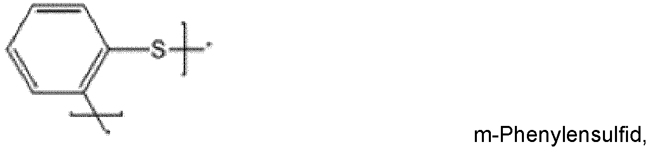

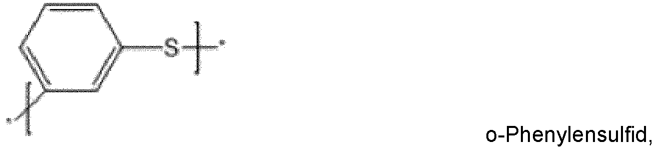

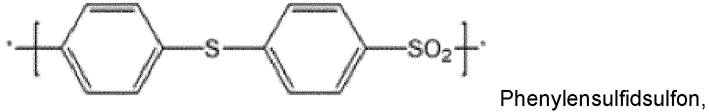

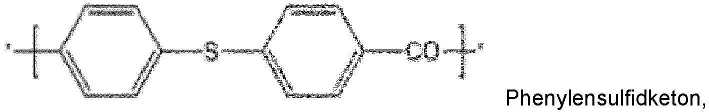

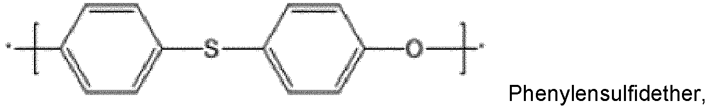

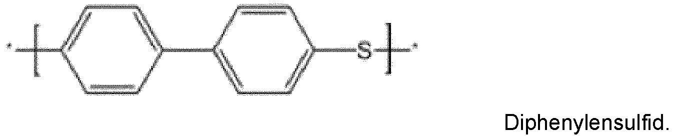

10. Röhrenförmige Anordnung gemäß einem der vorhergehenden Ansprüche, wobei eines oder beide des ersten Elements oder des zweiten Elements relativ zu dem anderen des ersten Elements oder des zweiten Elements verschiebbar beweglich sind.

11. Röhrenförmige Anordnung gemäß einem der Ansprüche 1-9, die ferner ein oder mehrere röhrenförmige dritte Elemente beinhaltet, wobei jedes der dritten Elemente dem ersten Element gleicht oder sich davon unterscheidet und jedem der anderen dritten Elemente gleicht oder sich davon unterscheidet,
wobei das zweite Element das erste Element und jedes der dritten röhrenförmigen Elemente umgibt,
wobei die röhrenförmige Anordnung ferner eine erste Zwischenschicht, die das erste Element und jedes des einen oder der mehreren dritten Elemente umgibt und zwischen dem zweiten Element und dem ersten Element und jedem der dritten Elemente eingerichtet ist, beinhaltet.

12. Röhrenförmige Anordnung gemäß einem der vorhergehenden Ansprüche, die ferner ein oder mehrere röhrenförmige dritte Elemente beinhaltet, wobei jedes der dritten Elemente dem ersten Element gleicht oder sich davon unterscheidet und jedem der anderen dritten Elemente gleicht oder sich davon unterscheidet,
wobei das zweite Element das erste Element und jedes der dritten röhrenförmigen Elemente umgibt,
wobei die röhrenförmige Anordnung ferner ein einzelnes viertes Element, das ein entsprechendes des ersten Elements und jedes der dritten Elemente umgibt, beinhaltet, wobei das vierte Element ein geschäumtes Polyphenylensulfidpolymermaterial mit einer geschäumten Dichte, das aus einem nichtgeschäumten Polyphenylensulfidpolymermaterial mit einer nichtgeschäumten Dichte geschäumt wird, beinhaltet,
wobei die geschäumte Dichte des geschäumten Polyphenylensulfidpolymermaterials des vierten Elements weniger als etwa 50 % der nichtgeschäumten Dichte des nichtgeschäumten Polyphenylensulfidpolymermaterials des vierten Elements beträgt, und
wobei das geschäumte Polyphenylenpolymermaterial des vierten Elements dem geschäumten Polyphenylenpolymermaterial des zweiten Elements gleicht oder sich davon unterscheidet.

13. Röhrenförmige Anordnung gemäß einem der vorhergehenden Ansprüche 1-11, die ferner Folgendes beinhaltet:
ein oder mehrere röhrenförmige dritte Elemente, wobei jedes der dritten Elemente dem ersten Element gleicht oder sich davon unterscheidet und jedem der anderen dritten Elemente gleicht oder sich davon unterscheidet; und
mindestens zwei vierte röhrenförmige Elemente, wobei jedes vierte Element ein entsprechendes des ersten Elements und der dritten Elemente umgibt, wobei jedes fünfte Element ein geschäumtes Polyphenylensulfidpolymermaterial mit einer geschäumten Dichte, das aus einem nichtgeschäumten
Polyphenylensulfidpolymermaterial mit einer nichtgeschäumten Dichte geschäumt wird, beinhaltet,
wobei die geschäumte Dichte des geschäumten Polyphenylensulfidpolymermaterials des vierten Elements weniger als etwa 50 % der nichtgeschäumten Dichte des nichtgeschäumten Polyphenylensulfidpolymermaterials des vierten Elements beträgt;
wobei das geschäumte Polyphenylenpolymermaterial des vierten Elements dem geschäumten Polyphenylenpolymermaterial des zweiten Elements gleicht oder sich davon unterscheidet.

14. Röhrenförmige Anordnung gemäß einem der vorhergehenden Ansprüche, die ferner ein Heizelement, das zwischen dem ersten Element und dem zweiten Element eingerichtet ist und sich entlang einer Länge des ersten Elements erstreckt, beinhaltet.

15. Eine röhrenförmige Anordnung, die Folgendes beinhaltet:
ein röhrenförmiges erstes Element, das eine äußere Oberfläche und eine innere Oberfläche aufweist, wobei die innere Oberfläche eine innerste Oberfläche der Anordnung definiert; und
ein röhrenförmiges zweites Element, das die äußere Oberfläche des ersten Elements umgibt, wobei das zweite Element ein geschäumtes Polyphenylensulfidpolymermaterial mit einer geschäumten Wärmeleitfähigkeit, das aus einer Mischung eines Schaumbildners und eines nichtgeschäumten Polyphenylensulfidpolymermaterials mit Polymerketten, die verzweigt oder vernetzt sind, geschäumt wird, beinhaltet, wobei das Polyphenylensulfid eine nichtgeschäumte Wärmeleitfähigkeit aufweist,
wobei das geschäumte Polyphenylensulfidpolymermaterial einen durchschnittlichen Zelldurchmesser von mindestens 100 µm aufweist, und
wobei die geschäumte Wärmeleitfähigkeit mindestens etwa 50 % weniger als die nichtgeschäumte Wärmeleitfähigkeit beträgt.

## Revendications

1. Un assemblage tubulaire comprenant :
un premier élément tubulaire présentant une surface externe et une surface interne, la surface interne définissant une surface la plus à l'intérieur de l'assemblage ; et
un deuxième élément tubulaire entourant la surface externe du premier élément, le deuxième élément comprenant un matériau polymère de sulfure de polyphénylène expansé présentant une masse volumique expansée et une effusivité thermique expansée qui est expansée à partir d'un mélange d'un matériau polymère de sulfure de polyphénylène non expansé présentant des chaînes polymères qui sont ramifiées ou
réticulées et d'un agent moussant, le sulfure de polyphénylène présentant une masse volumique non expansée et une effusivité thermique non expansée,
où le matériau polymère de sulfure de polyphénylène expansé présente un diamètre d'alvéole moyen d'au moins 100 µm,
où la masse volumique expansée est inférieure à environ 50 % de la masse volumique non expansée ; et
où l'effusivité thermique expansée est inférieure à environ 50 % de l'effusivité thermique non expansée.

2. L'assemblage tubulaire de la revendication 1, où l'agent moussant comprend entre environ 0,1 et 5 % en poids total de l'agent moussant et du matériau polymère de sulfure de polyphénylène.

3. L'assemblage tubulaire de n'importe laquelle des revendications précédentes, où l'agent moussant est un agent moussant chimique comprenant un tétrazole, un carbonate métallique, ou un oxyde métallique.

4. L'assemblage tubulaire de n'importe lesquelles des revendications précédentes, où le matériau polymère de sulfure de polyphénylène expansé présente une conductivité thermique expansée et le matériau polymère de sulfure de polyphénylène non expansé présente une conductivité thermique non expansée, la conductivité thermique expansée étant d'au moins environ 50 % inférieure à la conductivité thermique non expansée.

5. L'assemblage tubulaire de n'importe lesquelles des revendications précédentes, où le matériau polymère de sulfure de polyphénylène expansé est une mousse à alvéoles fermées.

6. L'assemblage tubulaire des revendications précédentes 1 à 4, où le matériau polymère de sulfure de polyphénylène expansé est une mousse à alvéoles semi-fermées.

7. L'assemblage tubulaire de n'importe lesquelles des revendications précédentes, où au moins environ 70 % en moles du matériau polymère de sulfure de polyphénylène présente une unité de répétition de la formule structurale suivante :

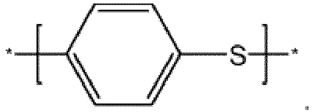

8. L'assemblage tubulaire de n'importe lesquelles des revendications précédentes, où au moins environ 70 % en moles du matériau polymère de sulfure de polyphénylène présente une unité de répétition d'une formule selon la formule structurale suivante : 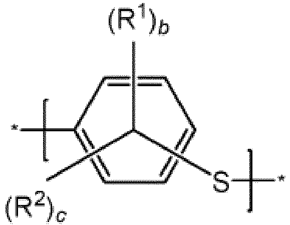 où R¹ et R² sont indépendamment l'hydrogène, un halogène, un groupe alkyle, un groupe alcoxy, un groupe haloalkyle, un groupe cycloalkyle, un groupe hétérocycloalkyle, un groupe cycloalkyloxy, un groupe aryle, un groupe aralkyle, un groupe aryloxy, un groupe aralkyloxy, un groupe héréroaryle, un groupe hétéroaralkyle, un groupe alcényle, un groupe alcynyle, un groupe amine, un groupe amide, un groupe alkylèneamine, un groupe arylèneamine, ou un groupe alcénylèneamine, un nitro, un cyano, un acide carboxylique ou un sel de celui-ci, un acide phosphonique ou un sel de celui-ci, ou un acide sulfonique ou un sel de celui-ci, et où les valeurs de b et c peuvent être de 0 (ce qui signifie aucune substitution) ou plus.

9. L'assemblage tubulaire de n'importe lesquelles des revendications précédentes, où 30 % en moles ou moins du matériau polymère de sulfure de polyphénylène présente une unité de répétition sélectionnée dans le groupe constitué d'un ou de plusieurs des composés suivants :

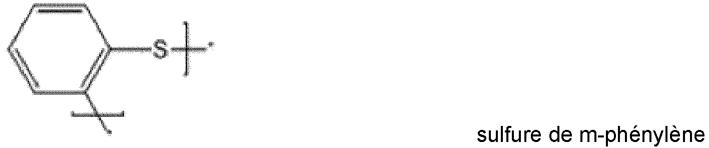

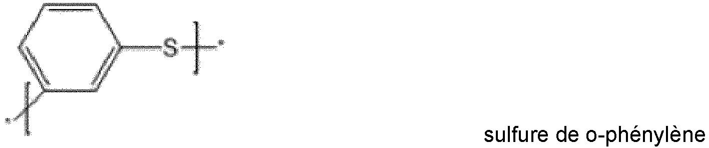

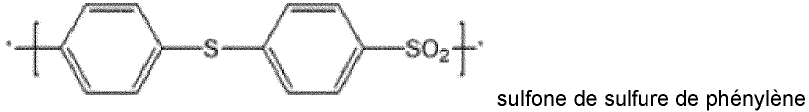

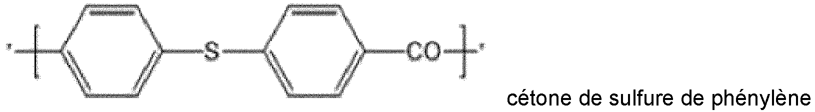

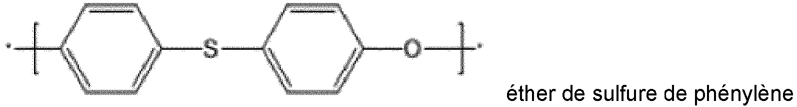

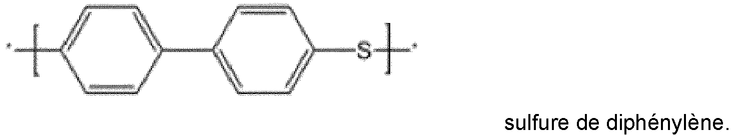

10. L'assemblage tubulaire de n'importe lesquelles des revendications précédentes, où un élément parmi le premier élément et le deuxième élément, ou les deux, sont mobiles par coulissement par rapport à l'autre élément parmi le premier élément et le deuxième élément.

11. L'assemblage tubulaire de n'importe laquelle des revendications 1 à 9, comprenant en outre un ou plusieurs troisièmes éléments tubulaires, chacun des troisièmes éléments étant identique au premier élément ou différent de celui-ci et étant identique à chacun des autres troisièmes éléments ou différent de celui-ci,
où le deuxième élément entoure le premier élément et chacun des troisièmes éléments tubulaires,
l'assemblage tubulaire comprenant en outre une première couche intermédiaire entourant le premier élément et chacun des un ou plusieurs troisièmes éléments, et étant disposée entre le deuxième élément et le premier élément et chacun des troisièmes éléments.

12. L'assemblage tubulaire de n'importe lesquelles des revendications précédentes, comprenant en outre un ou plusieurs troisièmes éléments tubulaires, chacun des troisièmes éléments étant identique au premier élément ou différent de celui-ci et étant identique à chacun des autres troisièmes éléments ou différent de celui-ci,
où le deuxième élément entoure le premier élément et chacun des troisièmes éléments tubulaires,
l'assemblage tubulaire comprenant en outre un quatrième élément individuel entourant un élément correspondant parmi le premier élément et chacun des troisièmes éléments, le quatrième élément comprenant un matériau polymère de sulfure de polyphénylène expansé présentant une masse volumique expansée qui est expansée à partir d'un matériau polymère de sulfure de polyphénylène non expansé présentant une masse volumique non expansée,
où la masse volumique expansée du matériau polymère de sulfure de polyphénylène expansé du quatrième élément est inférieure à environ 50 % de la masse volumique non expansée du matériau polymère de sulfure de polyphénylène non expansé du quatrième élément, et
où le matériau polymère de polyphénylène expansé du quatrième élément est identique au matériau polymère de polyphénylène expansé du deuxième élément ou différent de celui-ci.

13. L'assemblage tubulaire de n'importe lesquelles des revendications précédentes 1 à 11, comprenant en outre :
un ou plusieurs troisièmes éléments tubulaires, où chacun des troisièmes éléments est identique au premier élément ou différent de celui-ci et est identique à chacun des autres troisièmes éléments ou différent de celui-ci ; et
au moins deux quatrièmes éléments tubulaires, où chaque quatrième élément entoure un élément correspondant parmi le premier élément et les troisièmes éléments, chaque cinquième élément comprenant un matériau polymère de sulfure de polyphénylène expansé présentant une masse volumique expansée qui est expansée à partir d'un matériau polymère de sulfure de polyphénylène non expansé présentant une masse volumique non expansée,
où la masse volumique expansée du matériau polymère de sulfure de polyphénylène expansé du quatrième élément est inférieure à environ 50 % de la masse volumique non expansée du matériau polymère de sulfure de polyphénylène non expansé du quatrième élément ;
où le matériau polymère de polyphénylène expansé du quatrième élément est identique au matériau polymère de polyphénylène expansé du deuxième élément ou différent de celui-ci.

14. L'assemblage tubulaire de n'importe lesquelles des revendications précédentes, comprenant en outre un élément chauffant disposé entre le premier élément et le deuxième élément et s'étendant sur une longueur du premier élément.

15. Un assemblage tubulaire comprenant :
un premier élément tubulaire présentant une surface externe et une surface interne, la surface interne définissant une surface la plus à l'intérieur de l'assemblage ; et
un deuxième élément tubulaire entourant la surface externe du premier élément, le deuxième élément comprenant un matériau polymère de sulfure de polyphénylène expansé présentant une conductivité thermique expansée qui est expansée à partir d'un mélange d'un agent moussant et d'un matériau polymère de sulfure de polyphénylène non expansé présentant des chaînes polymères qui sont ramifiées ou
réticulées, le sulfure de polyphénylène présentant une conductivité thermique non expansée,
où le matériau polymère de sulfure de polyphénylène expansé a un diamètre d'alvéole moyen d'au moins 100 µm, et
où la conductivité thermique expansée est d'au moins environ 50 % inférieure à la conductivité thermique non expansée.
